# EUROPEAN PATENT APPLICATION

(11) **EP 2 117 002 A2**
(43) Date of publication of application: **11.11.2009**
(21) Application number: 09154887.5
(22) Date of filing: 11.03.2009
(51) Int. Cl.: G11B 7/125, G11B 7/007, G11B 7/006

(54) **Optical disc drive and method of controlling the same**

(30) Priority: 21.04.2008 KR 20080036502
(71) Applicant: Samsung Electronics Co., Ltd., Suwon-si, Gyeonggi-do (KR)
(72) Inventor: Yemialyanau, Valery, Gyeonggi-do (KR)
(74) Representative: D'Halleweyn, Nele Veerle Trees Gertrudis

(57) **Abstract**

An optical disc drive, which is capable of stably controlling a laser diode without having an influence on other data by recording a test pattern in at least one of a run-in area and a run-out area of a recording unit block and detecting the characteristics of the laser diode, and a method of controlling the same. The method of controlling an optical disc drive can include recording a test pattern in at least one of a header and a tail of a recording unit block including a data area having a predetermined size, detecting input/output characteristics of a laser diode via the recorded test pattern, and controlling the laser diode such that the laser diode generates a target output on the basis of the detected input/output characteristics.

## Description

### BACKGROUND OF THE INVENTION

### 1. Field of the Invention

The present general inventive concept relates to automatic power control (APC) loop control technology, and, more particularly, to an optical disc drive capable of minimizing an optical power error due to a temperature variation and a method of controlling the same.

### 2. Description of the Related Art

An optical disc drive includes an APC circuit which constantly maintains recording light power and reproduction light power. The APC circuit of the optical disc drive detects the amount of light output from a laser diode during the recording/reproduction of data and controls the level of driving current of the laser diode on the basis of the detected result, such that the recording power or the reproduction power of the laser beam output from the laser diode has a target level.

When a temperature is increased, the characteristics of the laser diode which is driven by current deteriorate. Thus, laser generation efficiency deteriorates. In order to solve this problem, an APC algorithm is used. That is, the amount of laser beam irradiated from the laser diode of a pickup module is detected, and the driving current of the laser diode is increased if the amount of laser beam is reduced to a target value or less and is decreased if the amount of laser beam exceeds the target value, such that the same power is continuously generated.

In a conventional optical disc drive, since light generation efficiency of the laser diode and detection efficiency of a photodiode are changed if the temperature is increased, it is difficult to constantly maintain the output of the laser diode.

In particular, while the data is recorded/reproduced at a high speed, since the deterioration of the recording sensitivity is further increased by the variation in characteristics of the laser diode due to the temperature variation, it is difficult to stably control the recording/reproduction power.

### SUMMARY OF THE INVENTION

The present general inventive concept provides an optical disc drive, which is capable of stably controlling a laser diode without having an influence on other data by recording a test pattern in at least one of a run-in area and a run-out area of a recording unit block and detecting the characteristics of the laser diode, and a method of controlling the same.

Additional features and utilities of the present general inventive concept will be set forth in part in the description which follows and, in part, will be obvious from the description, or may be learned by practice of the general inventive concept.

The foregoing and/or other aspects and utilities of the present general inventive concept are achieved by providing a method of controlling an optical disc drive, the method including: recording a test pattern in at least one of a header and a tail of a recording unit block including a data area having a predetermined size; detecting input/output characteristics of a laser diode via the recorded test pattern; and controlling the laser diode such that the laser diode generates a target output on the basis of the detected input/output characteristics.

The recording of the test pattern is performed with respect to at least one of a run-in area included in the header of the recording unit block and a run-out area included in the tail of the recording unit block.

The test pattern may be recorded in any one of a guard 1 area allocated to the run-in area and a guard 3 area allocated to the run-out area.

The guard 1 area may include an automatic power control (APC) area in which the test pattern is recorded and a repeated bit pattern area in which the same pattern having a predetermined bit number is repeatedly recorded in order to identify the header of the recording unit block.

The guard 3 area may include an automatic power control (APC) area in which the test pattern is recorded and a repeated bit pattern area in which the same pattern having a predetermined bit number is repeatedly recorded such that, when discontinuous data is recorded in another recording unit block after the recording of the data in one recording unit block is completed, the respective data of the two recording unit blocks do not overlap each other.

The method may further include generating an APC write strategy to record the test pattern, and the test pattern may be recorded in any one of the header and the tail of the recording unit block using the APC write strategy.

The method may further include previously storing the APC write strategy, and, when the test pattern is recorded, the stored APC write method is read out and used to record the test pattern.

A write strategy to record the test pattern may allow all power levels of the laser diode to be used.

A write strategy to record the test pattern may control the power level of the laser diode such that data on a neighboring track is not erased when the test pattern is recorded.

The foregoing and/or other aspects and utilities of the present general inventive concept may also be achieved by providing an optical disc drive including: a pickup module including a light emission unit to irradiate light on a recording surface of an optical disc and a light receiving unit to detect the light irradiated from the light emission unit; and a controller to record a test pattern in at least one of a header and a tail of a recording unit block including a data area having a predetermined size, detect input/output characteristics of a laser diode via the recorded test pattern, and control the laser diode such that the laser diode generates a target output on the basis of the detected input/output characteristics.

The optical disc drive may further include a memory to store an APC write strategy to record the test pattern, and the controller may retrieve the stored APC write strategy and record the test pattern.

A write strategy to record the test pattern may allow all power levels of the laser diode to be used.

According to the general inventive concept, it is possible to provide an optical disc drive, which is capable of stably controlling a laser diode without having an influence on other data by recording a test pattern in at least one of a run-in area and a run-out area of a recording unit block and detecting the characteristics of the laser diode, and a method of controlling the same.

In particular, according to the general inventive concept, it is possible to reduce an influence according to the reduction of the level of a FPDO signal due to a short pulse width when data is recorded on a high-density optical disc such as a blu-ray disc (BD) at a high speed so as to stably detect the FPDO signal.

The foregoing and/or other aspects and utilities of the present general inventive concept may also be achieved by providing a method of controlling an optical disc drive, the method including recording laser control information in an area of a recording unit block having a predetermined size other than a data area, detecting input/output characteristics of a laser diode using the recorded laser power information and controlling the laser diode to generate a target laser output on the basis of the detected input/output characteristic.

The area of a recording unit block other than a data area can include at least one of a header area and a tail area.

The input characteristics of the laser diode can indicate the level of the driving current and the output characteristics thereof indicate the power level of the output laser beam.

The foregoing and/or other aspects and utilities of the present general inventive concept may also be achieved by providing an optical disc drive, including a pickup module including a light emission unit to irradiate light on a recording surface of an optical disc and a light receiving unit to detect the light irradiated from the light emission unit, and a controller to record laser control information in an area of a recording unit block having a predetermined size other than a data area, to detect input/output characteristics of a laser diode via the laser control information, and to control the laser diode to generate a target output on the basis of the detected input/output characteristic.

The foregoing and/or other aspects and utilities of the present general inventive concept may also be achieved by providing a computer readable storage medium containing a method of controlling an optical disc drive, wherein the method includes recording a test pattern in at least one of a header and a tail of a recording unit block including a data area having a predetermined size, detecting input/output characteristics of a laser diode using the recorded test pattern, and controlling the laser diode such that the laser diode generates a target output on the basis of the detected input/output characteristics.

### BRIEF DESCRIPTION OF THE DRAWINGS

These and/or other features and utilities of the present general inventive concept will become apparent and more readily appreciated from the following description of the embodiments, taken in conjunction with the accompanying drawings of which:
FIG. 1 is a block diagram showing an optical disc drive according to an embodiment of the present general inventive concept;
FIG. 2 is a block diagram showing an APC block of the optical disc drive shown in FIG. 1;
FIG. 3 is a view showing a relationship between driving current of a laser diode and a light output using a temperature as a parameter;
FIG. 4 is a view showing a write strategy at the time of high-speed recording operation of an optical disc and a light detection signal corresponding to the write strategy;
FIG. 5 is a view showing a data recording structure according to an embodiment of the present general inventive concept; and
FIG. 6 is a flowchart illustrating a method of controlling an optical disc drive according to an embodiment of the present general inventive concept.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below to explain the present general inventive concept by referring to the figures.

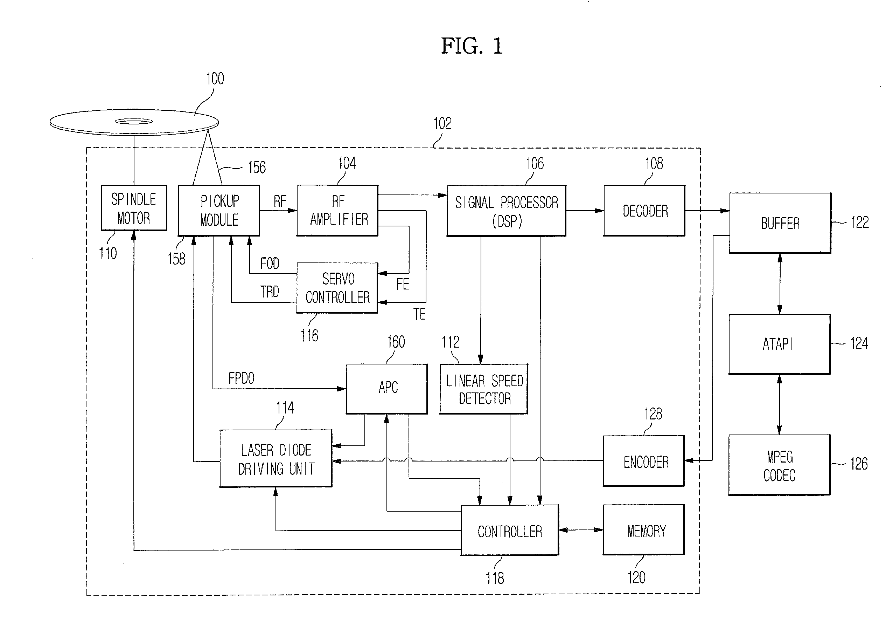

Hereinafter, exemplary embodiments of the present general inventive concept will be described with reference to FIGS. 1 to 5.

FIG. 1 is a block diagram showing an optical disc drive according to an embodiment of the present general inventive concept. In FIG. 1, a reference numeral 102 denotes an optical disc drive. A buffer 122, an advanced technology attachment packet interface (ATAPI) 124 and an MPEG CODEC 126 are components of other devices (e.g., a blu-ray disc (BD) player, a computer or the like) connected to the optical disc drive 102. If necessary, the buffer 122, the ATAPI 124 and the MPEG CODEC 126 may be incorporated into the optical disc drive 102.

As shown in FIG. 1, an optical disc 100 rotates by driving a spindle motor 110. The spindle motor 110 is controlled by a driving signal generated by a controller 118 so as to rotate the optical disc 100.

The pickup module 158 includes a laser diode which is a light emitting unit. A laser beam 156 having recording power is generated by the laser diode and is irradiated onto a recording surface of the optical disc 100 such that data is recorded on the optical disc 100. When data is reproduced and erased, reproduction power and erasing power are respectively used.

When data is recorded on the optical disc 100, the recorded data is encoded by an encoder 128 in non-return to zero inverted (NRZI) format and the encoded data is supplied to a laser diode driving unit 114. The controller 118 supplies a driving signal to record the encoded data on a data recording surface of the optical disc 100 to the laser diode driving unit 114 so as to change the recording power of the laser diode.

When the data recorded on the optical disc 100 is reproduced, the controller 118 controls the laser diode of the pickup module 158 to generate the laser beam 156 having the reproduction power such that the laser beam is irradiated on the data recording surface of the optical disc 100. The laser beam 156 that is irradiated on the optical disc 100 is then reflected from the data recording surface and is received by a light receiving unit (e.g., a photodiode) of the pickup module 158. The light receiving unit generates an RF signal corresponding to the amount of received light. An RF amplifier 104 receives and converts the RF signal into a binary signal. The binary signal that is converted by the RF amplifier 104 is restored to digital data by a signal processor 106. Since the restored digital data is in an encoded state, it is decoded by a decoder 108. A linear velocity detector 112 detects the linear velocity of the rotated optical disc 100 and supplies the linear velocity to the controller 118.

The RF amplifier 104 extracts a tracking error (TE) signal and a focus error (FE) signal from the received RF signal and supplies them to a servo controller 116. The servo controller 116 generates a focus driving (FOD) signal on the basis of the FE signal and performs focus servo control of the pickup module 158. The servo controller 116 generates a tracking driving (TRD) signal on the basis of the TE signal and performs tracking control of the pickup module 158.

An APC unit 160 detects the amount of laser beam irradiated by the laser diode of the pickup module 158 and supplies information on the detected amount of laser beam to the laser diode driving unit 114. The laser diode driving unit 114 controls the recording/reproduction/erasing power of the laser diode on the basis of this information.

In FIG. 1, the controller 118 controls the overall operation of the optical disc drive 102. An external memory 120, which stores information necessary to control the overall operation of the optical disc drive 102 or data generated in a control process, is connected to the controller 118. The external memory 120 stores an APC write strategy which is used to record a test pattern in an APC area according to the present embodiment. In the case where an internal memory is included in the controller 118 or an internal memory is included in the APC unit 160, the APC write strategy according to the present embodiment may be stored in the internal memory of the controller 118 or the APC unit 160.

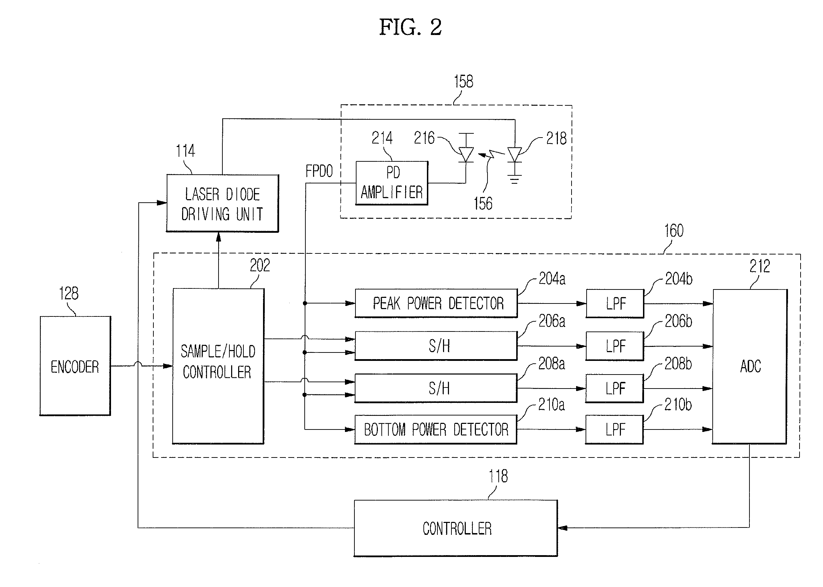

FIG. 2 is a block diagram showing an APC block of the optical disc drive shown in FIG. 1, according to an exemplary embodiment. As shown in FIG. 2, the APC block 160 includes a sample/hold controller 202, analog circuits 204a to 210b, and an analog/digital converter (ADC) 212.

In the pickup module 158 of FIG. 2, an optical system and a servo system are omitted, and a laser diode 218 to generate the laser beam 156, a photodiode 216 to detect the level of the laser beam 156 output from the laser diode 218, and a PD amplifier 214 to amplify the detection signal of the photodiode 216 and output a photo diode output (FPDO) signal are shown.

The sample/hold controller 202 of the APC block 160 receives data of NRZI format output from the encoder 128 and controls sample/hold operations of the analog circuits 204a to 210a on the basis of the data. The analog circuits 204a, 206a, 208a and 210a detect a peak power level, two middle power levels and a bottom power level of the FPDO signal output from the pickup module 218, respectively. That is, a peak power detector 204a detects the peak power level of the FPDO signal, a bottom power detector 210a detects the bottom power level of the FPDO signal, and the two sample/hold units 206a and 208a detect the middle power level of the FPDO signal. Low-pass filters (LPF) 204b, 206b, 208b and 210b are connected to the output sides of the peak power detector 204a, the bottom power detector 210a and the two sample/hold units 206a and 208a such that the influence of noise is minimized.

The ADC 212 converts the analog signals output from the peak power detector 204a, the bottom power detector 210a and the two sample/hold units 206a and 208a into digital signals and supplies the digital signals to the controller 118.

The controller 118 compares the level of the FPDO signal detected by the APC block 160 with a target value and controls the level of the driving current of the laser diode 218 of the laser diode driving unit 114 according to the compared result, thereby controlling the intensity of the laser beam 156. The target value indicates the level of the driving current of the laser diode 218 necessary to accurately record data to be recorded on the optical disc 100.

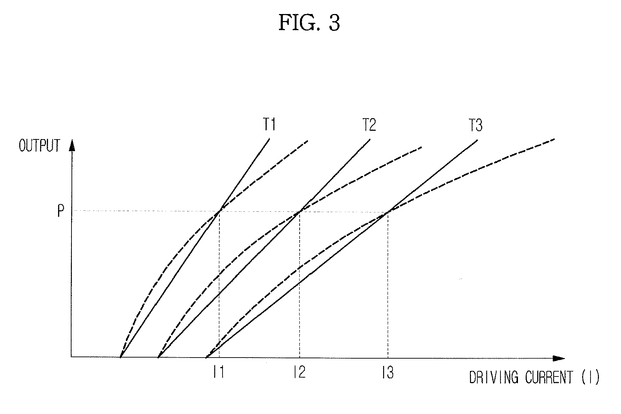

FIG. 3 is a view showing a relationship between the driving current of the laser diode and a light output using a temperature as a parameter. The optical output according to the driving current of the laser diode is significantly influenced by the temperature variation. Accordingly, the optical disc drive detects the optical output of the laser diode using the photodiode and controls the driving current of the laser diode such that the optical output constantly becomes a target level.

As shown in FIG. 3, in order to obtain a target output P of the laser diode, the driving current is increased from I1 to I3 as the temperature is increased from T1 to T3. That is, if the fixed driving current is supplied even when the temperature varies, it is impossible to obtain the target optical output P of the laser diode.

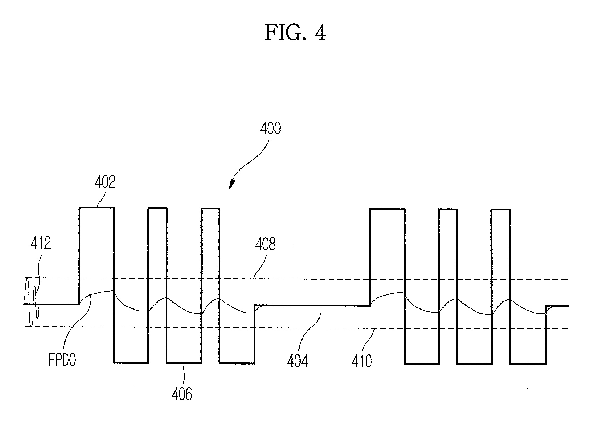

FIG. 4 is a view showing a write strategy at the time of high-speed recording operation of an optical disc and a light detection signal corresponding to the write strategy. As shown in FIG. 4, a write strategy 400 used in a multi-pulse write strategy optical disc has three power levels including a peak power level 402, an erasing power level 404 and a bottom power level 406. Since a PD amplifier 214 shown in FIG. 2 has a band-pass frequency, the amplitude of the FPDO signal detected by the photodiode 216 is influenced by both the level and a duty ratio of the write strategy 400. That is, if the level of the write strategy 400 is too low or the duty ratio of the write strategy 400 is too small, the amplitude of the FPDO signal is very small.

In FIG. 4, since the duty ratio of the write strategy 400 is small, the amplitude of the FPDO signal is very small. Thus, the level of the FPDO signal does not reach a peak detection value 408 and a bottom detection value 410. In this case, since the APC unit 160 cannot detect the level of the FPDO signal, the level of the output power of the laser diode 218 cannot be detected, and thus the output power of the laser diode 218 cannot be controlled to a target level.

If noise 412 included in the FPDO signal is large, the peak power detector 204a and the bottom power detector 210a of the APC unit 160 cannot accurately detect the peak power level and the bottom power level of the FPDO signal. Thus, the level of the output power of the laser diode 218 cannot be detected, and thus the output power of the laser diode 218 cannot be controlled to a target level.

In this embodiment, an APC area is provided in the optical disc, and the peak power level, the bottom power level and the erasing power level of the FPDO signal are detected while any data is recorded in the APC area using the write strategy having a sufficient length.

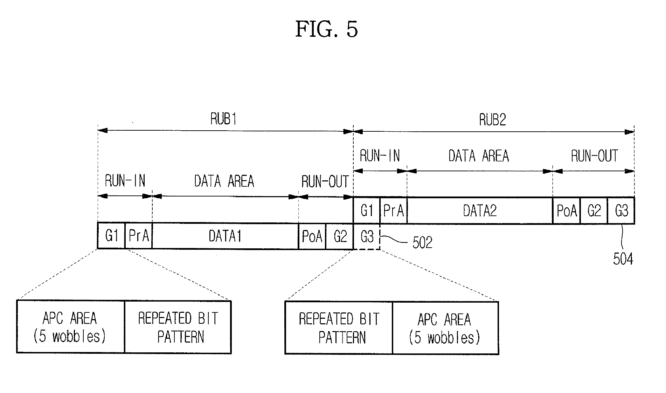

FIG. 5 is a view showing a data recording structure according to an embodiment of the present general inventive concept. As shown in FIG. 5, data is recorded in a unit of a recording unit block (RUB) having a predetermined size.

A first recording unit block RUB1 includes a run-in area RUN-IN, a data area, and a run-out area RUN-OUT. The run-in area RUN-IN includes a guard 1 area G1 and a preamble PrA. The guard 1 area G1 is divided into a repeated bit pattern area and an APC area APC. In the repeated bit pattern area, the same pattern having a predetermined bit number, which identifies a header of the recording unit block RUB1, is repeated by a predetermined number of times. The APC area APC indicates an area in which a test pattern to detect the characteristics of the FPDO signal is recorded according to the present embodiment. The run-out area RUN-OUT includes a postamble (PoA), a guard 2 area G2 and a guard 3 area G3. In the guard 2 area G2, the same pattern having a predetermined bit number, which identifies a tail of the first recording unit block RUB1, is repeated by a predetermined number of times.

The guard 3 area G3 indicated by a reference numeral 502 is allocated to the tail of the first recording unit block RUB1. The guard 3 area G3 is divided into a repeated bit pattern area and an APC area APC. The repeated bit pattern area is used to prevent data, which is recorded after the recording of continuous data is completed, from overlapping with data recorded previously. That is, for example, data is recorded in a second recording unit block RUB2 after the recording of the data in the first recording unit block RUB1. At this time, if there is no continuity between the data of the first recording unit block RUB1 and the data of the second recording unit block RUB2, the same pattern having a predetermined bit number is repeatedly recorded in the repeated bit pattern area such that the respective data of the recording unit blocks RUB1 and RUB2 does not overlap each other. The APC area APC indicates an area in which a test pattern to detect the characteristics of the FPDO signal is recorded according to embodiments of the present general inventive concept.

If the recording of the second recording unit block RUB2 is performed after the recording of the first recording unit block RUB1, instead of the guard 3 area G3 denoted by the reference numeral 502, the guard 3 area G3 denoted by a reference numeral 504 is allocated to the tail of the second recording unit block RUB2. That is, if there is no continuity between first data DATA1 recorded in the data area of the first recording unit block RUB1 and second data DATA2 recorded in the data area of the second recording unit block RUB2, the guard 3 area G3 denoted by the reference numeral 502 is allocated to the tail of the first recording unit block RUB1 and the guard 3 area G3 denoted by the reference numeral 504 is not allocated. In contrast, if there is a continuity between the first data DATA1 recorded in the data area of the first recording unit block RUB1 and the second data DATA2 recorded in the data area of the second recording unit block RUB2, the guard 3 area G3 denoted by the reference numeral 502 is not allocated and the guard 3 area G3 denoted by the reference numeral 504 is allocated to the tail of the second recording unit block RUB2.

In the above described embodiments, the test pattern is recorded in the APC area APC provided in the guard 1 area G1 in the run-in area RUN-IN or the guard 3 area G3 in the run-out area RUN-OUT and the input/output characteristics of the laser diode 218 detected while the test pattern is recorded are detected. The input characteristics of the laser diode 218 indicate the level of the driving current and the output characteristics thereof indicate the power level of the output laser beam or the characteristics of the FPDO signal detected by the photodiode 216 which is an optical detector to detect the laser beam reflected from the surface of the optical disc.

In FIG. 5, if there is a continuity between the first data DATA1 recorded in the data area of the first recording unit block RUB1 and the second data DATA2 recorded in the data area of the second recording unit block RUB2, and thus the guard 3 area G3 denoted by the reference numeral 502 is not allocated, the test pattern is recorded in the guard 1 area G1 allocated to the header of the second recording unit block RUB2.

When data is recorded on a recordable optical disc, the power of the laser, that is, the recording power used to record the data, should be optimized in order to form a mark having a target size. In order to optimize the recording power, the write strategy and an optimum power calibration or an optimum power control (OPC) technique are used.

In the case where the data is recorded on the recordable optical disc, the write strategy is changed according to the manufacturer or the type of the recording medium in order to optimize recording/reproduction quality. The manufacturer of the recording medium stores signal characteristics according to the recording powers of its own recording mediums in a database and provides the database to a manufacturer of an optical disc drive such that the manufacturer of the optical disc drive refers to the database at the time of the design and the production of the optical disc drive. The write strategy corresponding to the manufacturer and the type of the recording medium is previously obtained at the time of the design and the production of the optical disc drive and is stored in firmware of the produced optical disc drive.

When the data is recorded on the recordable optical disc, the optical disc drive reads an identifier (ID) of a loaded optical disc, checks the manufacturer and the type of the optical disc, selects the write strategy corresponding thereto, and writes the data. If the loaded optical disc is not recorded in the firmware of the optical disc drive, a default write strategy is selected and used. The default write strategy is set according to the type of the medium one by one.

As described above, since the APC area APC according to an embodiment of the present general inventive concept is not associated with the data area, the test pattern as well as the write strategy selected in the OPC process can be recorded in the APC area APC using other write strategies. Accordingly, if the test pattern is recorded in the APC area APC using any write strategy even at the time of a high-speed recording operation, it is possible to obtain a FPDO signal having a level (amplitude) enough to detect the peak detection value 408 and the bottom detection value 410. Accordingly, the FPDO signal and the driving current of the laser diode (218) are compared so as to detect the deterioration in characteristics of the laser diode 218 due to the temperature variation. Thus, the output of the laser diode 218 having the target level can be generated by changing the driving current.

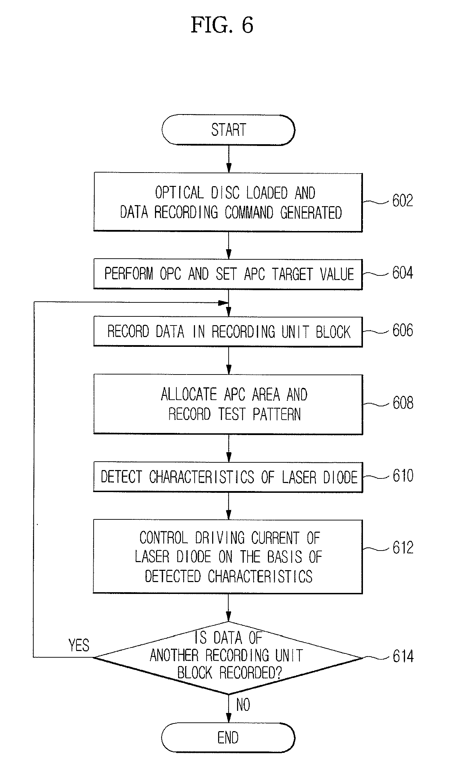

FIG. 6 is a flowchart illustrating a method of controlling an optical disc drive according to an embodiment of the present general inventive concept. As shown in FIG. 6, in order to record the data on the recordable optical disc 100, first, the recordable optical disc 100 is loaded on the optical disc drive 102 and a data recording command to record the data on the optical disc 100 is generated (Operation 602). If the data recording command is generated, the OPC process is performed, the OPC recording power is decided, and the APC target value, that is, the level of the driving current of the laser diode 218 necessary to accurately record the data to be recorded on the optical disc 100, is decided (Operation 604).

If the OPC recording power is decided, first, the data is started to be recorded in the data area DATA1 of the first recording unit block RUB1 using the OPC recording power as start recording power (Operation 606). If the recording of the data in the first recording unit block RUB1 is completed, the guard 3 area G3 is allocated and the test pattern is recorded in the APC area APC of the guard 3 area G3 (Operation 608). The characteristics of the laser diode 218 are detected from the FPDO signal generated by the photodiode 216 while the test pattern is recorded in the guard 3 area G3 (Operation 610). The characteristics of the laser diode 218 include the level of the output power according to the current supplied to the laser diode 218.

If the characteristics of the laser diode 218 are detected, the current supplied to the laser diode 218 is controlled on the basis of the detected characteristics such that the output power of the laser diode 218 has a target level (Operation 612). If data of another recording unit block RUB2 to be recorded on the optical disc 100 is present ("Yes" in Operation 614), the method returns to Operation 606 and the data recording process and the process of recording the test pattern in the APC area and detecting the characteristics of the laser diode are repeated. If there is no data to be recorded, the recording of the data is completed ("No" in Operation 614).

The present general inventive concept can also be embodied as computer-readable codes on a computer-readable recording medium. The computer-readable recording medium is any data storage device that can store data which can be thereafter read by a computer system. Examples of the computer-readable recording media include read-only memory (ROM), random-access memory (RAM), CD-ROMs, magnetic tapes, floppy disks, optical data storage devices, and carrier waves (such as data transmission through the Internet). The computer-readable recording medium can also be distributed over network-coupled computer systems so that the computer-readable code is stored and executed in a distributed fashion. Also, functional programs, codes, and code segments to accomplish the present general inventive concept can be easily construed by programmers skilled in the art to which the present general inventive concept pertains. The method illustrated in FIG. 1 can be stored in the computer-recorded medium in a form of computer-readable codes to perform the method when the computer reads the computer-readable codes of the recording medium.

Although a few embodiments of the present general inventive concept have been shown and described, it would be appreciated by those skilled in the art that changes may be made in these embodiments without departing from the principles and spirit of the general inventive concept, the scope of which is defined in the claims and their equivalents.

## Claims

1. A method of controlling an optical disc drive, the method comprising:
recording a test pattern in at least one of a header and a tail of a recording unit block including a data area having a predetermined size;
detecting input/output characteristics of a laser diode using the recorded test pattern; and
controlling the laser diode such that the laser diode generates a target output on the basis of the detected input/output characteristics.

2. The method according to claim 1, wherein the recording of the test pattern is performed with respect to at least one of a run-in area included in the header of the recording unit block and a run-out area included in the tail of the recording unit block.

3. The method according to claim 2, wherein the test pattern is recorded in any one of a guard 1 area allocated to the run-in area and a guard 3 area allocated to the run-out area.

4. The method according to claim 3, wherein the guard 1 area includes:
an automatic power control (APC) area in which the test pattern is recorded; and
a repeated bit pattern area in which the same pattern having a predetermined bit number is repeatedly recorded in order to identify the header of the recording unit block.

5. The method according to claim 3, wherein the guard 3 area includes:
an automatic power control (APC) area in which the test pattern is recorded; and
a repeated bit pattern area in which the same pattern having a predetermined bit number is repeatedly recorded such that, when discontinuous data is recorded in another recording unit block after the recording of the data in one recording unit block is completed, the respective data of the two recording unit blocks do not overlap each other.

6. The method according to claim 1, further comprising:
generating an APC write strategy to record the test pattern,
wherein the test pattern is recorded in any one of the header and the tail of the recording unit block using the APC write strategy.

7. The method according to claim 6, further comprising:
previously storing the APC write strategy,
wherein, when the test pattern is recorded, the stored APC write method is read out and used to record the test pattern.

8. The method according to claim 1, wherein a write strategy to record the test pattern allows all power levels of the laser diode to be used.

9. The method according to claim 1, wherein a write strategy to record the test pattern controls the power level of the laser diode such that data on a neighboring track is not erased when the test pattern is recorded.

10. An optical disc drive comprising:
a pickup module including a light emission unit to irradiate light on a recording surface of an optical disc and a light receiving unit to detect the light irradiated from the light emission unit; and
a controller to record a test pattern in at least one of a header and a tail of a recording unit block including a data area having a predetermined size, to detect input/output characteristics of a laser diode via the recorded test pattern, and to control the laser diode such that the laser diode generates a target output on the basis of the detected input/output characteristics.

11. The optical disc drive according to claim 10, further comprising:
a memory to store an APC write strategy to record the test pattern,
wherein the controller retrieves the stored APC write strategy and records the test pattern.

12. The optical disc drive according to claim 10, wherein a write strategy to record the test pattern allows all power levels of the laser diode to be used.

13. A method of controlling an optical disc drive, the method comprising:
recording laser control information in an area of a recording unit block having a predetermined size other than a data area;
detecting input/output characteristics of a laser diode using the recorded laser power information; and
controlling the laser diode to generate a target laser output on the basis of the detected input/output characteristics.

14. The method according to claim 13, wherein the area of a recording unit block other than a data area includes at least one of a header area and a tail area.

15. The method according to claim 13, wherein the input characteristics of the laser diode indicate the level of the driving current and the output characteristics thereof indicate the power level of the output laser beam.
